# FASCICULE DE BREVET EUROPEEN

(11) **EP 2 904 654 B1**
(45) Date de publication et mention de la délivrance du brevet: **12.08.2020**
(21) Numéro de dépôt: 13818377.7
(22) Date de dépôt: 30.09.2013
(51) Int. Cl.: H01M 4/13, H01M 4/139, H01M 4/70, H01M 4/75, H01M 10/04, H01M 10/052, H01M 10/0587

(54) **BATTERIE BIPOLAIRE COMPRENANT UN COLLECTEUR DE COURANT AVEC MOYENS D'ÉTANCHÉITÉ INTÉGRÉS, PROCÉDÉ DE RÉALISATION D'UNE TELLE BATTERIE**
BIPOLARE BATTERIE MIT EINEM STROMKOLLEKTOR MIT EINGEBAUTER DICHTUNG UND VERFAHREN ZUR HERSTELLUNG SOLCH EINER BATTERIE
BIPOLAR BATTERY INCLUDING A CURRENT COLLECTOR HAVING A BUILT-IN SEALING MEANS, METHOD FOR MANUFACTURING SUCH A BATTERY

(30) Priorité: 01.10.2012 FR 1259260
(43) Date de publication de la demande: 12.08.2015
(73) Titulaire: Commissariat à l'Énergie Atomique et aux Énergies Alternatives, 75015 Paris (FR)
(72) Inventeur: CHAMI, Marianne, F-38600 Fontaine (FR); REYNIER, Yvan, F-38120 Saint Egreve (FR)
(74) Mandataire: Nony
(86) Numéro de dépôt international: PCT/IB2013/059015
(87) Numéro de publication internationale: WO 2014/053985

(56) Documents cités:
- EP-A1- 1 612 873
- WO-A2-2012/085515
- FR-A1- 2 961 637
- US-A1- 2004 067 417
- US-A1- 2011 129 722

## Description

### Domaine technique

La présente invention concerne le domaine des générateurs électrochimiques au lithium, qui fonctionnent selon le principe d'insertion ou de désinsertion, ou autrement dit intercalation- désintercalation, de lithium dans au moins une électrode.

Elle concerne plus particulièrement un accumulateur électrochimique au lithium comportant au moins un collecteur de courant à fonction bipolaire, aussi appelé batterie bipolaire. Dans une telle batterie bipolaire, le collecteur bipolaire supporte sur chacune de ses faces opposées un des deux matériaux d'électrode à signe opposé, c'est-à-dire avec une cathode (électrode positive) supportée par l'une des faces et une anode (électrode négative) supportée par l'autre des faces opposées.

L'invention a trait à la réalisation par bobinage d'une batterie bipolaire au lithium, avec l'obtention au final d'une étanchéité satisfaisante de ses compartiments vis-à-vis de l'électrolyte sous forme liquide.

### Etat de la technique

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Une architecture monopolaire est réalisée par bobinage. Le bobinage est constitué d'un collecteur de courant sur lequel est déposé en continu un matériau d'électrode positive (cathode), un séparateur en matériau polymère ou céramique venant s'intercaler à un matériau d'électrode négative (anode) lui-même déposé sur un autre collecteur de courant. Cette architecture monopolaire a comme avantage principal d'avoir une grande surface active de matériau mais la différence de potentiel est restreinte à la valeur unitaire de la différence de potentiel entre les deux matériaux d'électrode utilisés, ce qui est également le cas de la géométrie en empilement.

Afin d'augmenter le potentiel moyen d'un accumulateur Li-ion monopolaire tout en conservant une densité d'énergie comparable, il est connu de réaliser une batterie avec une pluralité de cellules électrochimiques en série. L'architecture de la batterie est ainsi qualifiée de bipolaire car elle comprend une cathode d'une cellule et une anode d'une cellule adjacente qui sont supportées sur un même collecteur de courant sous forme d'une plaque, qualifié lui-même d'électrode bipolaire. L'architecture d'une batterie bipolaire correspond ainsi à la mise en série de plusieurs accumulateurs monopolaires par l'intermédiaire des électrodes ou collecteurs de courant bipolaires, avec toutefois l'avantage d'avoir une résistance électrique réduite par rapport à des accumulateurs monopolaires reliés en série par des connecteurs extérieurs. On peut citer ici de nombreux demandes de brevets ou brevets concernant de telles batteries bipolaires, tels que US 7279248, US 7220516, US 7320846, US 7163765, WO 03/047021, WO 2006/061696, US 7097937 , EP 1612873.

Les avantages subséquents d'une batterie bipolaire sont d'avoir une masse réduite et de ne pas comporter de volumes inutiles.

La principale difficulté de conception d'une batterie bipolaire est la réalisation de compartiments parfaitement étanches à l'électrolyte, en général sous forme liquide, les uns vis-à-vis des autres. En effet, une mauvaise étanchéité entraine un dysfonctionnement de la batterie bipolaire par court-circuits ioniques.

Cela est d'ailleurs corroboré par le fait que la majorité de la littérature brevets portant sur le domaine des batteries Li-ion bipolaires concerne des solutions d'étanchéité, aussi appelée scellement, pour éviter les fuites d'électrolyte d'un compartiment à l'autre (courts circuits ioniques). Quelle que soit le système d'étanchéité retenu, il doit :
- être résistant chimiquement à l'électrolyte liquide, par exemple constitué d'une solution de sel de Lithium LiPF6 dans un mélange de solvant carboné d'éthylène (EC), diméthyle carbonate (DMC) ;
- être facile à mettre en œuvre: en effet, lors des opérations d'empilement des différents éléments constituants une batterie bipolaire, la mise en œuvre de l'étanchéité doit pouvoir être compatible avec une ligne de fabrication industrielle et être réalisée à des relativement basses températures ne générant pas ou peu de dégradation des électrodes, du séparateur ou encore de l'électrolyte ;
- assurer une étanchéité totale à long terme.

Parmi les demandes de brevet ou brevets déjà cités ci-dessus, on peut citer le brevet US 7220516 qui décrit une solution avec un film adhésif flexible 5, 6, collé sur la périphérie du collecteur bipolaire.

On peut également citer le brevet US 7320846 qui décrit une solution d'enrobage des collecteurs 4 et électrolytes 6 dans une résine 10.

On peut également citer le brevet US 7163765 qui décrit une solution d'étanchéité avec des entretoises 9 mixtes en polyamide/polypropylène PP agencées entre collecteurs bipolaires, le polyamide étant soudé directement à la périphérie des collecteurs à distance des cellules.

Le brevet US 7097937 propose quant à lui une solution d'étanchéité double puisqu'une barrière intérieure 14,22 en fluoropolymère est agencée sur la périphérie du collecteur bipolaire 11 et un cadre extérieur 18, 23 en élastomère est agencé à l'extérieur de la barrière 14, 22 sur et autour du collecteur bipolaire avec éventuellement l'agencement d'une bague supplémentaire 15 en élastomère sur le collecteur 11.

On peut citer encore la demande de brevet EP 2073300 au nom de la demanderesse qui propose une solution selon laquelle les dimensions des plaques sont augmentées l'une par rapport à l'autre adjacente et les joints d'étanchéité interposés entre les plaques interconnectrices sont décalés transversalement afin que deux joints ne se trouvent pas au droit l'un de l'autre selon l'axe d'empilement des cellules.

On peut citer également la demande de brevet JP 2010153224 qui décrit la réalisation d'une batterie bipolaire avec chaque collecteur de courant bipolaire 1 constitué par un polymère chargé de particules en matériau conducteur, l'étanchéité étant réalisée par un cordon en résine 31 à la périphérie de et sur chaque face de collecteur bipolaire 1. La demande de brevet JP2011204386 divulgue également une batterie bipolaire de ce type avec un collecteur bipolaire 1 en polymère chargé et dont l'étanchéité est assurée par un cordon périphérique 2 en résine par liaison hydrogène au moyen de couche adhésive intermédiaire. Une batterie bipolaire selon l'enseignement de ces demandes ne peut être réellement envisagée pour une application où l'on cherche une forte puissance à délivrer par la batterie. En particulier, le collecteur de courant bipolaire 1 envisagé présente une faible conductivité électronique et une résistance électrique élevée.

La demande JP2010073500 divulgue également la réalisation d'une batterie bipolaire avec un collecteur de courant bipolaire constitué de particules métalliques 2a dans un liant polymère 2b. Différentes autres demandes, telles que JP 2010218764, JP2011054325 et WO2011092938 décrivent en outre la possibilité de charger le polymère en particules conductrices pour limiter au mieux la diffusion des ions lithium.

On peut citer enfin la demande WO 2011/157751 qui décrit une solution d'intégration des moyens d'étanchéité à base de polymère à une grille ou feuille métallique à fonction de collecteur de courant.

Ainsi, on peut résumer de la manière suivante les solutions déjà envisagées pour améliorer l'étanchéité des compartiments entre eux vis-à-vis de l'électrolyte dans une batterie bipolaire Li-ion :
- réalisation systématique du collecteur de courant bipolaire aussi appelé électrode bipolaire sous la forme d'une plaque ou en un polymère chargé en particules en matériau conducteur,
- utilisation de colles ou résines diverses à la périphérie de la plaque ou du polymère chargé en particules en matériau conducteur,
- augmentation du format de plaque de collecteur de courant bipolaire pour créer une barrière supplémentaire à l'électrolyte ;
- intégration des moyens d'étanchéité à base de polymère à une grille ou feuille métallique à fonction de collecteur de courant.

Toutes ces solutions d'étanchéité déjà envisagées pour les batteries bipolaires ont comme point commun de n'avoir été pensées que pour une géométrie en empilement des éléments bipolaires.

Or, réaliser une architecture de batterie bipolaire Li-ion par bobinage tout en proposant une solution d'étanchéité fiable aurait comme avantage supplémentaire de pouvoir augmenter la surface des électrodes et donc la capacité de la batterie bipolaire. Autrement dit, une batterie bipolaire réalisée par bobinage pourrait satisfaire à des applications de forte puissance à délivrer qui n'offrent qu'un volume restreint pour l'emplacement de ladite batterie, en particulier des outillages portables.

Différentes réalisations de batteries bipolaires par bobinage ont déjà été proposées.

Ainsi, le brevet US 6664006 propose la réalisation d'une batterie bipolaire par étapes initiales classiques de réalisation de collecteurs bipolaires, empilement et étanchéité des compartiments électrochimiques associés puis par une étape de bobinage, c'est-à-dire de bobinage des compartiments électrochimiques avec collecteurs bipolaires empilés et dont l'étanchéité est déjà réalisée. Cette solution n'est pas réellement envisageable. En effet, les compartiments électrochimiques à collecteurs bipolaires ont tous une forme générale de parallélépipède de type rectangulaire ou carrée, avec la zone d'étanchéité disposée selon un cadre périphérique à la partie active des électrodes. L'empilement d'un grand nombre de compartiment avec leurs collecteurs bipolaires augmente l'épaisseur de la batterie. Ainsi, si on effectue un bobinage de cet empilement étanche, les rayons de courbure selon lesquels les compartiments sont pliés sont différents : le rayon de courbure du compartiment dans la partie centrale est notamment très inférieur respectivement très supérieur à celui du compartiment en périphérie supérieure respectivement inférieure de l'empilement. Cela induit le risque important de soumettre le cadre d'étanchéité à des contraintes très différentes, et donc le risque de créer des zones de rupture. De ce fait, on ne peut envisager de bobiner une batterie bipolaire à compartiments bipolaires empilés tout en conservant leur étanchéité réalisée préalablement au bobinage selon un cadre d'étanchéité périphérique comme décrit dans le brevet US 6664006.

La demande de brevet WO 2010/108956 divulgue quant à elle la réalisation par juxtaposition voisine et successive de compartiments bipolaires par la mise en commun d'un même support métallique formant collecteur bipolaire. En utilisant des supports métalliques qui sont souples, il est alors possible d'orienter les compartiments les uns par rapport aux autres et donc d'adapter la forme finale de la batterie bipolaire en particulier sous la forme d'une bobine. Cette solution présente l'inconvénient majeur que la surface de support métallique de collecteur à employer est importante par rapport à la surface active des électrodes dédiée. En outre, la réalisation de plusieurs éléments bipolaires sur un même support collecteur de courant peut s'avérer délicate par la fragilité du support lors du process.

Le but général de l'invention est de proposer une autre solution de bobinage d'une batterie bipolaire Li-ion que celles déjà envisagées selon l'état de l'art, qui permette d'envisager des applications de forte puissance dans un volume restreint pour l'emplacement de la batterie, tout en étant applicable industriellement et fiable.

Un but particulier est de proposer une solution de bobinage d'une batterie bipolaire, qui permette de conserver une bonne étanchéité des compartiments entre eux vis-à-vis de l'électrolyte, en particulier de l'électrolyte liquide, une fois le bobinage réalisé et ce sans augmenter la surface à proprement parler des collecteurs de courant.

### Exposé de l'invention

Pour ce faire, l'invention a pour objet une batterie bipolaire telle que revendiquée dans la revendication 1.

Selon l'invention, on réalise une bande support de collecteur de courant dont au moins une portion d'étanchéité est déformable élastiquement ou plastiquement pour pouvoir subir les contraintes de traction lors de l'enroulement sans risque d'affaiblir l'étanchéité à l'électrolyte. La dimension de la portion déformable en polymère dans le sens de l'enroulement, c'est-à-dire dans le sens de l'axe longitudinal X, est choisie avantageusement en fonction du nombre de compartiments empilés qui constituent au final la batterie bipolaire une fois le bobinage réalisé. Plus le nombre de compartiments empilés à bobiner est important, plus le rayon de courbure (et donc l'étirement) de la bande support du collecteur de courant la plus à l'extérieur de la bobine, c'est-à-dire initialement celui situé sur le dessus de l'empilement, est grand. Autrement dit, on détermine au préalable de l'enroulement (bobinage), une dimension de partie déformable suffisante pour qu'elle subisse les contraintes de traction lors de l'enroulement sans risque de rupture.

De manière surprenante, bien que simple à réaliser, la solution selon l'invention n'avait jamais été envisagée pour le bobinage de batteries bipolaires.

Grâce à l'invention, on peut bobiner des compartiments électrochimiques avec électrodes bipolaires comme s'il n'y avait qu'une seule épaisseur à bobiner.

Contrairement aux solutions de bobinage de batteries bipolaires selon l'état de l'art, telles que celles décrites dans les demandes de brevet WO 2010/108956 et US 2003/0190520, il n'est pas nécessaire selon l'invention de juxtaposer des compartiments bipolaires ou de les décaler les uns par rapport aux autres.

Grâce à l'invention, on peut réaliser des batteries bipolaires à tension doublée par rapport à des batteries monopolaires dans un volume d'emplacement dédié qui est identique.

Ainsi, le dispositif selon l'invention permet de conserver l'étanchéité proprement dite d'une batterie bipolaire lors de son bobinage. On peut donc envisager une utilisation à forte puissance pour les batteries bipolaires intégrant par bobinage des dispositifs selon l'invention dans un volume d'emplacement dédié jusqu'à présent à l'emplacement de batteries monopolaires.

Une application particulièrement intéressante que l'invention peut viser est la fourniture de batteries bipolaires de forte puissance pour des appareils qui n'offrent qu'un volume restreint pour l'emplacement de la batterie, en particulier des outillages portables tels que des débroussailleuses.

La portion périphérique en polymère déformable peut être reliée à la portion centrale au moins en partie conductrice par soudure, collage, thermoscellage...

Le polymère majoritaire du matériau isolant et apte à être déformé peut être choisi parmi une polyoléfine, un caoutchouc nitrile (NBR), un caoutchouc styrène-butadiène (SBR). De préférence, la polyoléfine est choisie parmi un polyéthylène (PE), un polypropylène (PP), un polyimide, un polyétheréthercétone (PEEK). On peut ainsi choisir des polymères qui ont déjà fait leur preuve en tant que constituant d'emballage souple de batterie Li-ion, tel que l'emballage commercialisé par la société Showa Denko sous les références commerciales N° ADR-ON25/AL40/CPP40 ou N° ADR-ON25/AL40/CPP80.

Selon un mode de réalisation avantageux, la partie conductrice électrique peut être constituée par au moins une feuille métallique, les portions périphériques latérales en matériau isolant étant scellées à ladite feuille métallique.

Selon ce mode, la feuille métallique peut être scellée à un unique cadre en matériau isolant électrique et apte à être déformé, entourant complètement la feuille métallique.

De manière alternative, la feuille métallique peut être scellée respectivement à un cadre en matériau isolant électrique en forme de U en vue de face, entourant la feuille métallique hormis la portion latérale dimensionnée pour sa déformation, et à ladite portion latérale en matériau apte à être déformé.

Selon un autre mode de réalisation, la bande elle-même peut être en matériau isolant électrique et apte à être déformé, la partie conductrice électrique étant alors constituée par des particules conductrices électriques noyées dans la bande. Les particules conductrices peuvent être des particules de carbone, des billes métalliques,.... On veille bien entendu à ce que les particules conductrices électriques relient les deux faces d'un collecteur de courant. L'ajout des particules conductrices a pour effet de renforcer le polymère de la bande et de le rendre non ou très peu déformable dans la zone active des électrodes.

Selon cet autre mode, la bande est renforcée mécaniquement à sa périphérie, hormis la portion latérale dimensionnée pour sa déformation, par des particules non conductrices électriques. Ainsi, on peut rigidifier la bande isolante électriquement aux endroits où la déformation n'est pas souhaitée lors du bobinage.

Un dispositif selon l'invention peut avoir une épaisseur comprise entre 10 et 100 µm, de préférence entre 25 et 50 µm.

Un dispositif selon l'invention peut avoir toute forme géométrie, telle qu'une section de forme polygonale, par exemple un rectangle ou un carré, avec une zone dépourvue de couches métalliques définie ci-dessus agencée à la périphérie.

On peut envisager des dimensions planaires de longueur comprise entre 40 et 70 cm, typiquement de l'ordre de 50 cm, et de largeur comprise entre 10 et 25 cm, typiquement de l'ordre de 15 cm. La zone périphérique dépourvue de la portion conductrice électrique, et qui comprend la portion périphérique apte à être déformée selon l'invention peut former avantageusement un cadre de largeur comprise entre 1 mm et 10 cm, plus particulièrement entre 3 mm et 12 mm, typiquement de l'ordre de 5 mm. Ainsi, la zone périphérique peut représenter une superficie inférieure à 25 % de la superficie totale du dispositif, de préférence inférieure à 20 %, de préférence encore inférieure à 15 %.

En fonction du type de matériaux d'électrode d'insertion au lithium choisi, le collecteur de courant formé par au moins une feuille métallique peut être en aluminium ou métallisée en surface d'un autre métal, par exemple en aluminium superposé à du cuivre.

Lorsque le collecteur du courant du dispositif est destiné à être bipolaire, chaque face principale de la partie conductrice électrique est recouverte d'une électrode en matériau d'insertion au Lithium.

Par « électrode en matériau d'insertion au Lithium », on entend ici et dans le cadre de l'invention, une électrode comportant au moins un matériau d'insertion au lithium et au moins un liant en polymère. Eventuellement, l'électrode peut comprendre en plus un conducteur électronique, par exemple des fibres de carbone ou du noir de carbone.

Par « matériau d'insertion au lithium », en particulier pour l'électrode positive, on entend ici et dans le cadre de l'invention, un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule LiM_{y}(XO_{z})ₙ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Par « matériau d'insertion au lithium », en particulier pour l'électrode négative, on entend également un matériau choisi parmi: oxyde de titane lithié ou non, par exemple Li₄Ti₅O₁₂ ou TiO₂. Plus particulièrement, le matériau d'électrode négative peut être choisi parmi les matériaux carbonés, les oxydes de titane non lithiés et leurs dérivés et les oxydes de titane lithiés tels que Li₄Ti₅O₁₂ et leurs dérivés et un mélange de ceux-ci.

Par « dérivé lithié », on entend ici et dans le cadre de l'invention, des composés de formule Li₍₄₋ₓ₁₎Mₓ₁Ti₅O₁₂ et Li₄Ti_{(5-y1)}N_{y1}O₁₂, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici et dans le cadre de l'invention, Ti(_{5-y1})N_{y1}O₁₂, avec y1 compris entre 0 et 0,2 et N est un élément chimique choisi parmi Na, K, Mg, Nb, Al, Ni, Co, Zr, Cr, Mn, Fe, Cu, Zn, Si et Mo.

Lorsque le collecteur du courant du dispositif est destiné à être monopolaire, une seule des deux faces principales de la partie conductrice électrique est recouverte d'une électrode en matériau d'insertion au Lithium

De préférence, les anodes sont en Li4Ti5O12 et les cathodes en LiFePO4.

L'invention concerne également un procédé de réalisation d'une batterie bipolaire tel que revendiqué dans la revendication 7.

Par « séparateur », on entend ici et dans le cadre de l'invention, un isolant électrique, conducteur ionique formé par au moins un matériau polymère tel que le polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

L'électrolyte selon l'invention, peut être un liquide formé par un mélange de carbonate et au moins un sel de lithium. Par « sel de Lithium », on entend de préférence, un sel choisi parmi LiPF6, LiClO4, LiBF4 et LiAsF6.

Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate (CF₃SO₃), bis (trifluorométhanesulfonate imide [(CF₃SO₂)₂N] et tris(trifluorométhanesulfonate) méthide [(CF₃SO₂)₃C].

Le procédé de réalisation par enroulement en bobine d'une batterie bipolaire de forte capacité selon l'invention est particulièrement avantageux puisqu'il permet de faire l'enroulement (bobinage) de tous les compartiments de la batterie comme s'il n'y avait qu'une épaisseur unique à enrouler et sans risque d'affaiblir l'étanchéité de la batterie.

En particulier, cette mise en œuvre est d'autant plus avantageuse que le nombre de compartiments bipolaires constituant la batterie bipolaire est élevé. En effet, actuellement pour réaliser de manière industrielle le bobinage d'une batterie lithium ion monopolaire, on utilise une machine avec nécessairement un nombre de quatre systèmes de dérouleurs, à savoir deux pour les séparateurs, et deux pour les électrodes positives et négatives et un système d'alignement qui permet de conserver l'alignement de chaque élément déroulé par rapport aux autres. Ainsi, utiliser le même type de machine pour réaliser le bobinage d'une batterie bipolaire reviendrait à concevoir une machine avec un nombre conséquent de dérouleurs et système d'alignement, c'est-à-dire une machine très complexe. A titre d'exemple, pour une batterie bipolaire avec un nombre égal à douze compartiments bipolaires, il serait nécessaire de concevoir une machine avec un nombre de quarante-huit systèmes de dérouleurs et d'autant de systèmes d'alignement, ce qui est techniquement irréaliste.

Selon une variante avantageuse, lorsque les deux électrodes, aux extrémités de l'empilement et enroulées l'une contre l'autre, sont de même polarité, on réalise au préalable de l'étape d/, une étape c1/ de recouvrement de l'empilement par un film en matériau isolant électrique.

Selon une variante alternative, lorsque les deux électrodes, aux extrémités de l'empilement et enroulées l'une contre l'autre, sont de polarité inverse, on réalise au préalable de l'étape d/, les étapes suivantes :
c2/ mise en place d'un deuxième séparateur sur la cathode ou anode en matériau d'insertion au Lithium en extrémité d'empilement,
c3/ maintien mécanique du deuxième séparateur à l'empilement.

Pour finaliser la batterie bipolaire, c'est-à-dire la mettre sous sa forme prête à être utilisée, on prévoit une fois l'étape e/ réalisée, de réaliser les étapes ultérieures suivantes :
f/ emballage de l'enroulement à l'aide d'un film d'emballage en matériau isolant électrique afin de maintenir mécaniquement ledit enroulement sous la forme d'un cylindre,
g/ scellage de la partie inférieure du cylindre correspondant à une des portions périphériques longitudinales des bandes,
h/ introduction du cylindre à la partie inférieure scellée dans un récipient rigide de forme cylindrique complémentaire, le récipient rigide constituant l'emballage de la batterie,
i/ imprégnation des séparateurs par un électrolyte liquide introduit dans le récipient,
j/ scellage de la partie supérieure du cylindre correspondant à l'autre des portions périphériques longitudinales des bandes.

De préférence, chacun des deux collecteurs de courant terminal sous la forme d'un clinquant est soudé à la partie conductrice électrique de l'un des collecteurs de courant des dispositifs bipolaires décrits ci-dessus, pendant l'étape a/.

Selon un mode de réalisation de l'invention, on peut réaliser une batterie bipolaire comprenant n cellules électrochimiques empilées individuellement les unes sur les autres, en réalisant les étapes a/ à f/ susmentionnées avec (n-2) dispositifs chacun avec une électrode sur chaque face, n étant un nombre entier.

Le dépôt de chaque électrode sur la portion conductrice électrique formant un collecteur de courant d'au moins un des dispositifs peut être réalisé par une technique d'impression usuelle telle que sérigraphie, héliographie, flexographie, spray,....

### Description détaillée

D'autres avantages et caractéristiques ressortiront mieux à la lecture de la description détaillée, faite à titre illustratif en référence aux figures suivantes parmi lesquelles :
- la figure 1 est une vue schématique en coupe longitudinale d'une batterie bipolaire au lithium selon l'état de l'art,
- les figures 2A et 2B sont respectivement des vues de face et en coupe d'un collecteur de courant bipolaire utilisé dans une batterie bipolaire au lithium selon l'état de l'art,
- les figures 3A et 3B sont respectivement des vues de face et en coupe d'un autre collecteur de courant bipolaire utilisé dans une batterie bipolaire au lithium selon l'état de l'art,
- les figures 4A et 4B sont respectivement des vues de face et en coupe d'un dispositif à électrode bipolaire pour la réalisation d'une batterie bipolaire au lithium selon l'invention ;
- les figures 5A à 5C illustrent en vue de face différentes variantes de réalisation d'un dispositif à électrode bipolaire selon l'invention ;
- les figures 6A, 6B et 6C illustrent en vue de face respectivement une électrode monopolaire positive, un dispositif à électrode bipolaire selon l'invention et une électrode monopolaire négative, destinés à être empilés les uns sur les autres au préalable d'un bobinage selon l'invention ;
- la figure 7 est une vue en perspective d'un empilement réalisé à partir des éléments selon les figures 6A à 6C au préalable d'un bobinage selon l'invention ;
- la figure 8 illustre de manière schématique l'étape de bobinage conforme à l'invention d'un empilement selon la figure 7;
- les figures 9A à 9D illustrent les dernières étapes de réalisation d'une batterie bipolaire selon l'invention une fois le bobinage réalisé.

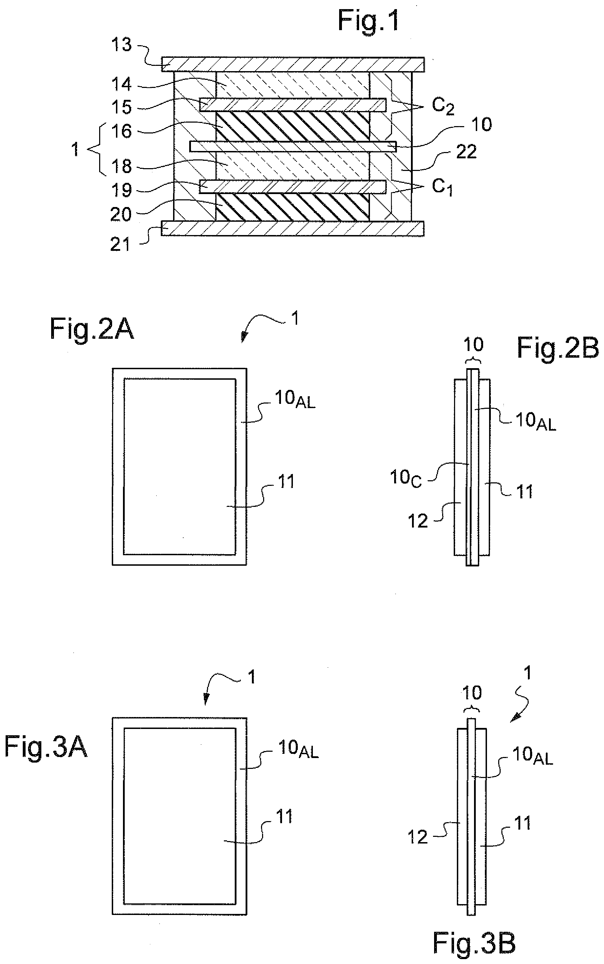

Par souci de clarté, les mêmes références désignant les mêmes éléments de batterie bipolaire selon l'état de l'art et selon l'invention sont utilisées pour toutes les figures 1 à 6B.

On précise que les différents éléments en selon l'invention sont représentés uniquement par souci de clarté et qu'ils ne sont pas à l'échelle.

On a représenté une batterie bipolaire Li-ion selon l'état de l'art en figure 1, telle qu'elle est illustrée dans la demande de brevet WO 03/047021. Cette batterie comporte en partie supérieure un substrat conducteur en aluminium 13 (collecteur de courant terminal positif) et une couche active 14 à base de matériau d'insertion au lithium positif, tel que du Li_{1.}O₄Mn_{1.96}O₄ et en partie inférieure un substrat conducteur en aluminium 21 (collecteur de courant terminal négatif) et une couche active 20 à base de matériau d'insertion au lithium positif, tel que du Li₄Ti₅O₁₂.

Au sein de cette batterie, une électrode bipolaire 1, aussi appelé collecteur de courant bipolaire, comprend une couche d'anode 16 et une couche de cathode 18 de part et d'autre d'un substrat conducteur en aluminium 10 sous la forme d'une plaque. Les électrodes inférieures 20 et supérieure 14 sont séparées de l'électrode bipolaire 1 par deux séparateurs 15, 19 dans lequel un électrolyte est présent sous forme liquide ou de gel. L'étanchéité aux électrolytes de la batterie entre les deux cellules électrochimiques adjacentes constituées 14, 15, 16 et 18, 19, 20 est assurée par un joint 22 qui est réalisé par un dépôt de résine ou de colle sur la périphérie de toutes les électrodes et la plaque 10.

Un collecteur de courant bipolaire 10 selon l'état de l'art est, en fonction des matériaux d'insertion aux ions lithium employés pour la réalisation des électrodes :
- soit constitué de deux plaques superposées, dont l'une typiquement en aluminium 10Al est recouverte par une cathode 11 et l'autre typiquement en cuivre 10C est recouverte par une anode 12 (figures 2A et 2B),
- soit constitué d'une seule plaque typiquement en aluminium 10Al recouverte sur une des faces par une cathode 11 et sur l'autre de ses faces par une anode 12 (figures 3A et 3B). La difficulté principale rencontrée dans la conception d'une batterie bipolaire à empilement selon l'état de l'art est la réalisation de compartiments parfaitement étanches à l'électrolyte, en général sous forme liquide, les uns vis-à-vis des autres, tel qu'entre les deux cellules C1 et C2, c'est-à-dire entre compartiments référencés 14, 15, 16 et 18, 19, 20 sur la figure 1.

Un collecteur de courant bipolaire 10 selon l'état de l'art est, en fonction des matériaux d'insertion aux ions lithium employés pour la réalisation des électrodes :
- soit constitué de deux plaques superposées, dont l'une typiquement en aluminium 10Al est recouverte par une cathode 11 et l'autre typiquement en cuivre 10C est recouverte par une anode 12 (figures 2A et 2B),
- soit constitué d'une seule plaque typiquement en aluminium 10Al recouverte sur une des faces par une cathode 11 et sur l'autre de ses faces par une anode 12 (figures 3A et 3B). La difficulté principale rencontrée dans la conception d'une batterie bipolaire selon l'état de l'art est la réalisation de compartiments parfaitement étanches à l'électrolyte, en général sous forme liquide, les uns vis-à-vis des autres, tel qu'entre les deux cellules C1 et C2, c'est-à-dire entre compartiments référencés 14, 15, 16 et 18, 19, 20 sur la figure 1.

Ainsi, la batterie bipolaire 1 selon l'état de l'art est à empilement car les cellules C1 et C2 (compartiments 14, 15, 16 et 18, 19, 20) sont au final dans la batterie empilées l'une sur l'autre.

Les inventeurs ont été confrontés à un besoin de fournir une batterie bipolaire pour des applications de forte puissance à délivrer qui n'offrent qu'un volume restreint pour l'emplacement de ladite batterie, en particulier des outillages portables tels que des débroussailleuses.

Ils ont alors pensé à réaliser une batterie bipolaire par bobinage car cela permet de pouvoir augmenter la surface des électrodes et donc la capacité de la batterie bipolaire. Or, les solutions proposées selon l'état de l'art sont soit non applicables industriellement soit non fiables en termes d'étanchéité vis-à-vis de l'électrolyte.

Les inventeurs ont alors envisagé une solution simple à mettre en œuvre, à savoir prévoir chaque élément bipolaire de la batterie avec une zone de matériau isolant électrique dédié à l'étanchéité qui soit en outre apte à être déformé pour subir les contraintes mécaniques de traction lors du bobinage sans risque de rupture et donc, avec la garantie du maintien de l'étanchéité lors du bobinage (enroulement).

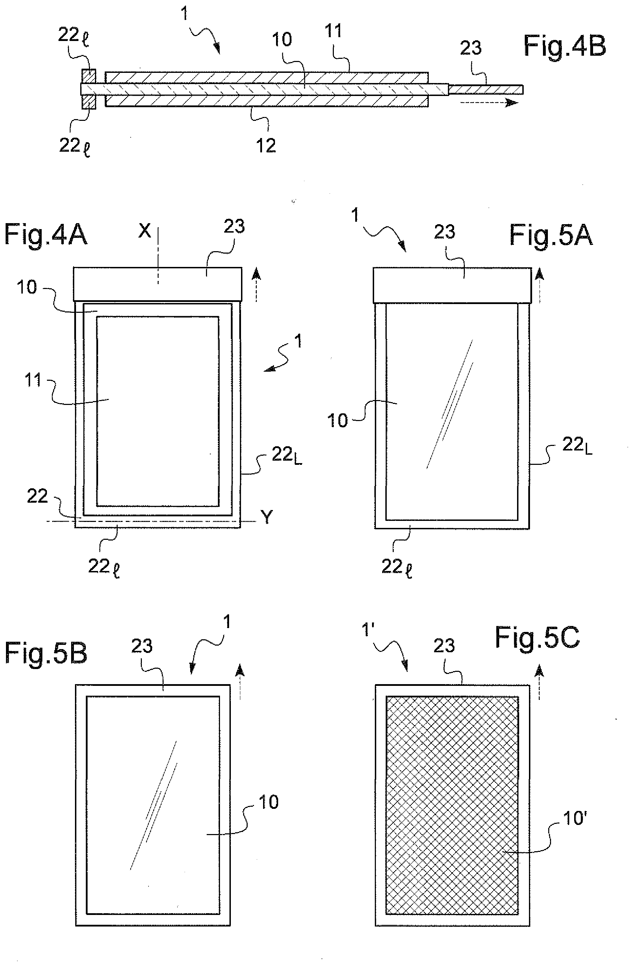

Ainsi, selon l'invention, il est prévu de réaliser un dispositif pour batterie bipolaire, avec une électrode bipolaire 10, 11, 12 comme représenté aux figures 4A et 4B. Le dispositif de forme allongée selon l'axe longitudinal X comporte une bande 1 de forme générale rectangulaire.

Cette bande comporte une portion centrale 10 au moins partie conductrice électrique en formant le collecteur de courant avec les deux faces principales respectivement recouvertes d'une cathode 11 et d'une anode 12.

Elle comporte également au moins deux portions périphériques latérales 221 et 23 reliées à la portion centrale 10 et s'étendant transversalement à l'axe longitudinal X. Les portions périphériques latérales 221, 23 sont en matériau isolant électrique comportant au moins un polymère, le matériau isolant d'au moins la portion latérale 23 étant apte à être déformé élastiquement ou plastiquement. Le polymère majoritaire du matériau isolant de la portion latérale déformable 23 peut être choisi parmi une polyoléfine, un caoutchouc nitrile (NBR), un caoutchouc styrène-butadiène (SBR). La polyoléfine est avantageusement choisie parmi un polyéthylène (PE), un polypropylène (PP), un polyimide, un polyétheréthercétone (PEEK).

Selon l'invention, les dimensions de la portion latérale 23 sont en outre déterminées pour permettre sa déformation sans rupture lors d'un enroulement de la bande autour d'un axe d'enroulement transversal à l'axe longitudinal X. Cet axe transversal est schématisé par l'axe Y, et, il est situé à proximité de la portion périphérique latérale 221.

Ainsi, comme décrit plus précisément ci-après, lorsqu'on réalise le bobinage autour de l'axe d'enroulement Y d'une pluralité de dispositifs, c'est-à-dire de compartiments bipolaires, empilés les uns sur les autres avec une étanchéité déjà au moins en partie achevée par liaison des portions latérales 221 d'une part et des portions latérales 23 d'autre part, les contraintes de traction subies par chacune des portions déformables 23 font qu'elles s'étirent sans risque de déchirure (rupture) et donc sans affaiblir l'étanchéité.

Selon un premier mode de réalisation, la portion centrale 10 peut être constituée par une feuille métallique, typiquement en aluminium comme représenté aux figures 4A et 4B. La portion latérale 23 selon l'invention est alors scellée peut alors être soit soudée, soit collée soit thermo-scellée à la feuille métallique.

La feuille métallique 10 peut être scellée à un cadre en matériau isolant électrique 22 en forme de U en vue de face, qui entoure celle-ci hormis la portion latérale 23 dimensionnée pour sa déformation. Ainsi, comme montré aux figures 4A, 4B et 5A, le cadre 22 en U comporte la portion périphérique latérale 221 et les deux portions périphériques longitudinales 22L. Au final, toutes les portions périphériques 221, 22L du cadre 22 et la portion déformable 23 constituent une des parois d'étanchéité de la batterie bipolaire.

Alternativement, la feuille métallique 10 peut être scellée à un unique cadre 23 en matériau isolant électrique et apte à être déformé, qui entoure complètement celle-ci (figure 5B). Ainsi selon cette variante, on prévoit un seul et même élément 23 d'étanchéité périphérique par dispositif.

Selon un deuxième mode de réalisation, la bande en elle-même 1' peut être constituée en un matériau isolant électrique et intégrant la portion latérale déformable 23, la partie conductrice 10' étant alors constituée par des particules conductrices électriques (figure 5C). Les particules conductrices peuvent être notamment des particules de carbone ou des billes métalliques...Quels que soient le matériau, la forme et les dimensions de ces particules 10', on veille à ce que lorsque noyées dans la bande 1', les particules conductrices 10' relient les deux faces principales de sorte à assurer la continuité électrique entre ces dernières. Bien que non représentées, d'autres variantes peuvent être prévues : en particulier, on peut prévoir de renforcer le matériau à base de polymère de la bande 1' par des particules non conductrices électriques, à l'exception de la portion périphérique déformable 23.

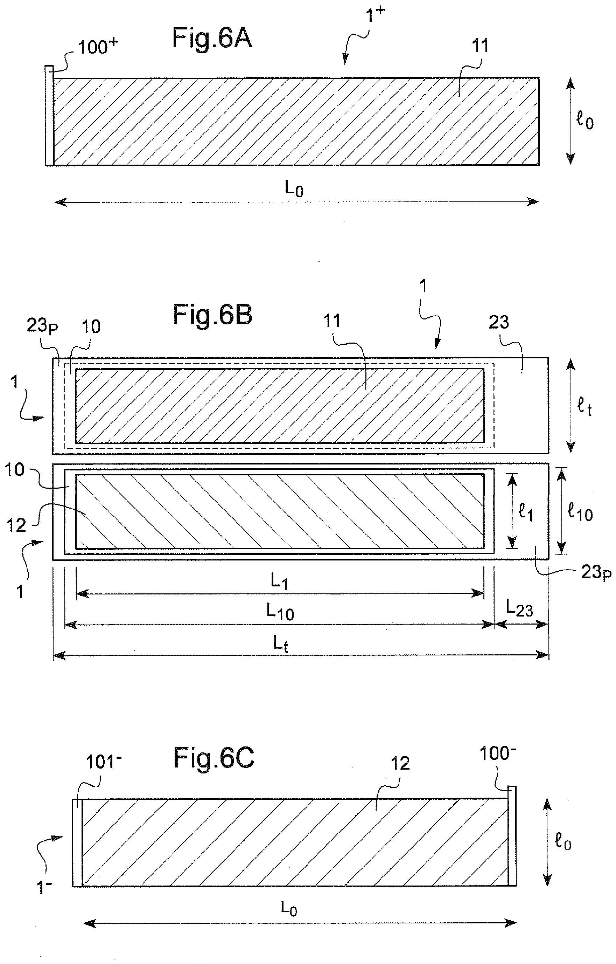

Aux figures 6A à 9D, on a illustré un procédé de réalisation par bobinage d'une batterie bipolaire selon l'invention, chacun des dispositifs unitaires 1 étant réalisé selon le premier mode, c'est-à-dire avec un collecteur de courant formé par une feuille métallique 10, et selon la variante à cadre 23 unique d'étanchéité à la périphérie de la feuille métallique 10.

Plus précisément, on a illustré la réalisation complète d'une batterie bipolaire enroulée à deux compartiments bipolaires selon l'invention, au format standard connu sous la désignation 18650.

A titre d'exemple illustratif, les caractéristiques techniques de cette batterie bipolaire sont les suivantes :
- Tension électrique nominale = 3.8V (2x1.9V), Capacité =0.4Ah ;
- Dimensions de la batterie finalisée avec l'emballage rigide (godet): 18x65 mm ;
- Electrodes positives 11: LiFePO4 (LFP), 90% de matière active, porosité 40%, grammage 7mg/cm²;
- Electrodes négatives 12: Li4Ti5O12 (LTO), 89% de matière active, porosité 40%, grammage 8mg/cm² ;
- Collecteurs de courant 10: aluminium 1085 ;
- Séparateur microporeux 24 pour l'électrolyte liquide : matériau tricouche polypropylène-polyéthylène-polypropylène (PP/PE/PP) avec 50% de porosité; dimensions : épaisseur de 21.5µm, largeur de 55 mm et longueur de 450mm ;
- Cadre d'étanchéité 23 : polypropylène (PP) ;
- Longueur Lt de la batterie hors emballage: 480mm ;
- Largeur lt de la batterie hors emballage: 60mm ;
- Epaisseur Et de la batterie hors emballage: 506µm ;
- Longueur L0 de matériau d'insertion au lithium: 410mm ;
- Largeur lo de matériau d'insertion au lithium: 49mm.

L'empilement initial de la batterie bipolaire selon l'invention est constitué d'une électrode monopolaire positive 1+, d'une électrode monopolaire négative 1- et de deux dispositifs identiques 1 à électrode bipolaire selon l'invention.

Chacune des électrodes monopolaire 1+, 1- est de forme générale rectangulaire et peut être qualifiée de biface car revêtue sur chacune de ses deux faces d'un matériau d'insertion au lithium, soit positif (cathode 11), soit négatif (anode 12).

Ainsi, l'électrode monopolaire positive 1+ est revêtue sur chacune de ses deux faces principales d'une couche active 11 en LFP de surface égale à 420x49mm². Un clinquant 100+ à fonction de collecteur terminal est soudé directement au collecteur 10+ de l'électrode monopolaire positive 1+ (figure 6A). A titre d'exemple, ce clinquant est en aluminium, a une épaisseur de 100µm, une largeur de 5mm dans le sens de l'axe X. La soudure du clinquant 100+ au collecteur de courant 10+ peut être faite par soudure électrique ou ultrasons.

Chacun des dispositifs à électrode bipolaire 1 selon l'invention a pour largeur et longueur externes, celles finales de la batterie enroulée, c'est-à-dire 10^{∗}L0.

L'une des faces du collecteur 10 est revêtue d'une couche active 11 en LFP tandis que l'autre des faces est revêtue d'une couche active 12 en LTO. Leur surface est égale à 410x49mm² (voir L1^{∗}11 sur figure 6B). Le collecteur 10 s'étend au-delà des surfaces actives d'électrodes 11, 12. Les dimensions externes du collecteur 10 sont égales à 420x55mm (voir L₁₀^{∗}l₁₀ en figure 6B).

Un cadre 23 en polypropylène est thermocollé sur chaque face principale au collecteur de courant 10 (figure 6C). Le cadre 23 a pour dimensions externes 60x480mm et internes 50x420 mm. Ainsi, conformément à l'invention, le cadre 23 en PP est agencé sur le collecteur 10 de telle sorte à avoir un dépassement d'une longueur L₂₃ suffisante pour pouvoir être déformée sans risque de rupture lors du bobinage. Dans l'exemple, la longueur L₂₃ est égale à 50mm. Un exemple de polypropylène convenant à la réalisation du cadre 23 selon l'invention peut être trouvé à l'adresse internet suivante : http://www.rs-particuliers.com/WebCatalog/Film Etirable Polypropylène 400mmX 300m-183953.aspx.

L'électrode monopolaire négative 1- est revêtue sur chacune de ses deux faces principales d'une couche active 11 en LTO de surface égale à 420x49mm². Un clinquant 100- à fonction de collecteur terminal est soudé directement au collecteur 10+ de l'électrode monopolaire positive 1- (figure 6C). A titre d'exemple, ce clinquant est en aluminium, a une épaisseur de 100µm, une largeur de 5mm dans le sens de l'axe X. La soudure du clinquant 100- au collecteur de courant 10- peut être faite par soudure électrique ou ultrasons. Une zone 101- dépourvue de couche active, c'est-à-dire nue, est prévue à l'extrémité de l'électrode 1-. A titre d'exemple, cette zone 101- a une largeur de 5 mm dans le sens de l'axe X.

Pour les électrodes monopolaires 1+, 1- et les deux dispositifs 1, 1', 1", les couches d'électrodes sont avantageusement réalisées par une technique d'impression (héliographie, flexographie ou sérigraphie) sur le collecteur de courant 10 formé par la feuille en aluminium 1085.

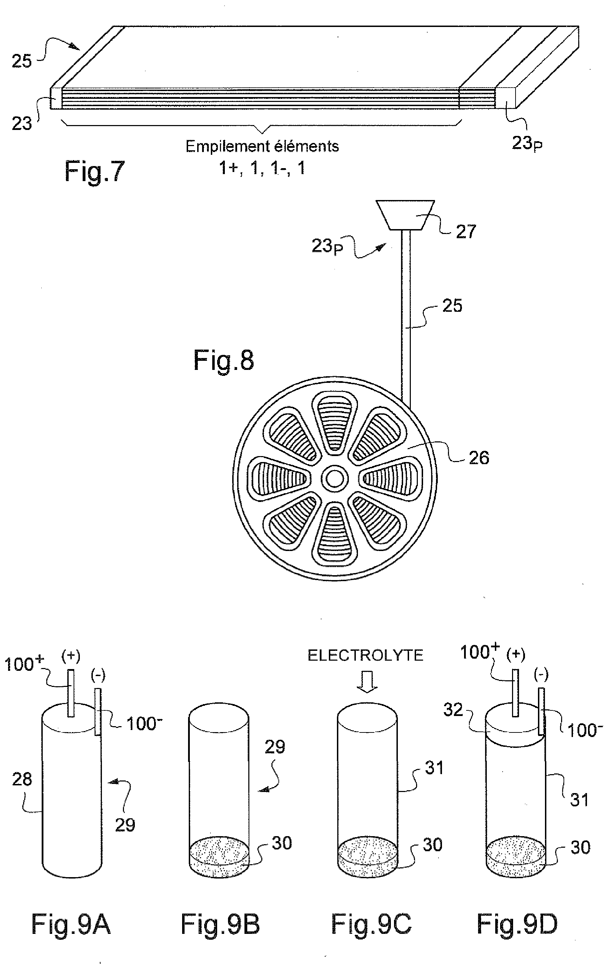

Une fois, les électrodes monopolaires 1+, 1- et les deux dispositifs 1 identiques à électrodes bipolaires 11, 12 réalisées, on les empile comme montré en figure 7, c'est-à-dire en intercalant entre chaque élément 1+, 1-, 1 un séparateur 24 pour électrolyte liquide. Ainsi, on intercale trois séparateurs 24 et le quatrième séparateur 24 est disposé à l'une des extrémités de l'empilement.

Une fois l'empilement réalisé, les deux portions périphériques latérales 23P des cadres d'étanchéité 23P sont thermo-scellées entre elles sur une largeur de 5mm. Les conditions du thermoscellage sont les suivantes : pression de IMPa, température de 190°C, maintien pendant 3s.

On obtient alors un empilement 25 des éléments 1+, 1, 1-, 1, prêt à être bobiné (figure 7).

L'empilement 25 est alors enroulé (bobiné) spiralé sur un noyau 26 tel que schématisé en figure 8. Le noyau 26 a un diamètre de l'ordre de de 3.5mm. L'électrode 1+ est maintenue au moment de l'enroulement par collage ou à l'aide d'un adhésif de type scotch sur le noyau 26 au niveau du clinquant 100+. De même, l'électrode 1- est maintenue au moment de l'enroulement par collage ou à l'aide d'un adhésif de type scotch au niveau de sa zone nue 101-. Le bobinage peut être réalisé par maintien à l'aide d'un mors 27 de la portion déformable 23P dont la longueur est dimensionnée pour ne pas risquer d'être rompue (figure 8).

Une fois le bobinage réalisé, la batterie bipolaire 1 se présente sous la forme d'un enroulement cylindrique. Afin de le maintenir mécaniquement sous cette forme géométrique, on réalise son emballage de l'enroulement à l'aide d'un film 28 d'emballage en matériau isolant électrique (figure 9A). A titre d'exemple, le cylindre 29 présente un diamètre de 17.3mm pour une hauteur de 60mm (figure 9A).

On réalise le thermoscellage de la base 30 du cylindre 29 (figure 9B). La base scellée 30 correspond à l'une des portions périphériques longitudinales des cadres d'étanchéité 23, c'est-à-dire selon l'axe X avant l'enroulement. Le thermoscellage peut être réalisé à l'aide d'une sole chauffante. Les conditions du thermoscellage sont les suivantes : pas de pression, température de 190°C, maintien pendant 3s.

L'ensemble suit ensuite le procédé de fabrication d'une batterie au format standard 18650. On introduit le cylindre 29 dont la base 30 est scellée dans un cylindre rigide 31, usuellement appelé godet, puis on effectue le remplissage sous vide du godet 31 à l'aide d'un électrolyte liquide (figure 9C).

On réalise alors, dans les mêmes conditions le thermoscellage du sommet 32 du cylindre 29 qui correspond à l'autre des portions périphériques longitudinales des cadres d'étanchéité 23 (figure 9D). L'étanchéité complète de la batterie bipolaire est alors assurée.

Enfin, le procédé est finalisé par ajout et sertissage d'un couvercle non représenté sur le godet 31.

On a ainsi réalisé une batterie Li-ion bipolaire enroulée selon un format standard 18650 mais avec une tension doublée par rapport une batterie Li-ion monopolaire selon le même format standard.

L'invention n'est pas limitée aux exemples qui viennent d'être décrits ; on peut notamment combiner entre elles des caractéristiques des exemples illustrés au sein de variantes non illustrées.

Il va de soi que si le bobinage a été décrit en relation avec une batterie bipolaire à deux cellules initialement empilées, il peut être réalisé de la même manière pour une batterie à un nombre n de cellules empilées en répétant les étapes précédentes avec un nombre égal à n-2 de dispositifs 1 à électrodes bipolaires et deux électrodes monopolaires 1+, 1- comme ci-dessus.

## Revendications

1. Batterie bipolaire comprenant au moins deux cellules électrochimiques (C1, C2) enroulées l'une sur l'autre et au moins un dispositif (1) pour générateur électrochimique au lithium, de forme allongée selon un axe longitudinal (X), comportant une bande comportant une portion centrale (10) au moins en partie conductrice électrique formant collecteur de courant dont au moins une des deux faces principales est recouverte d'une électrode en matériau d'insertion au lithium, et au moins deux portions périphériques latérales (221, 23, 23P) reliées à la portion centrale et s'étendant transversalement à l'axe longitudinal, les portions périphériques latérales étant en matériau isolant électrique comportant au moins un polymère, le matériau isolant d'au moins l'une des deux portions latérales étant apte à être déformé élastiquement ou plastiquement, les dimensions de cette dernière étant en outre déterminées pour permettre sa déformation sans rupture lors d'un enroulement de la bande autour d'un axe d'enroulement (Y), transversal à l'axe longitudinal (X) et, à proximité de l'autre des deux portions périphériques latérales,
chaque face principale de la partie conductrice électrique étant recouverte d'une électrode en matériau d'insertion au Lithium (11, 12),
dans lequel les deux portions périphériques latérales (221, 23, 23P) en matériau isolant électrique constituent une zone périphérique d'une paroi étanche aux électrolytes des deux cellules, qui entoure celles-ci.

2. Batterie selon la revendication 1, le polymère majoritaire du matériau isolant et apte à être déformé étant choisi parmi une polyoléfine, un caoutchouc nitrile (NBR), un caoutchouc styrène-butadiène (SBR).

3. Batterie selon la revendication 2, la polyoléfine étant choisie parmi un polyéthylène (PE), un polypropylène (PP), un polyimide, un polyétheréthercétone (PEEK).

4. Batterie selon l'une des revendications précédentes, la partie conductrice électrique étant constituée par au moins une feuille métallique, les portions périphériques latérales en matériau isolant étant scellées à ladite feuille métallique.

5. Batterie selon l'une des revendications 1 à 3, la bande étant en matériau isolant électrique et apte à être déformé, la partie conductrice électrique étant constituée par des particules conductrices électriques noyées dans la bande.

6. Batterie selon la revendication 5, la bande étant renforcée mécaniquement à sa périphérie, hormis la portion latérale dimensionnée pour sa déformation, par des particules non conductrices électriques.

7. Procédé de réalisation d'une batterie bipolaire comprenant au moins deux cellules électrochimiques (C1, C2) enroulées l'une sur l'autre, comprenant les étapes suivantes:
a/ réalisation de deux dispositifs (1) pour générateur électrochimique au lithium, de forme allongée selon un axe longitudinal (X), comportant une bande comportant une portion centrale (10) au moins en partie conductrice électrique formant collecteur de courant dont au moins une des deux faces principales est recouverte d'une électrode en matériau d'insertion au lithium, et au moins deux portions périphériques latérales (221, 23, 23P) reliées à la portion centrale et s'étendant transversalement à l'axe longitudinal, les portions périphériques latérales étant en matériau isolant électrique comportant au moins un polymère, le matériau isolant d'au moins l'une des deux portions latérales étant apte à être déformé élastiquement ou plastiquement, les dimensions de cette dernière étant en outre déterminées pour permettre sa déformation sans rupture lors d'un enroulement de la bande autour d'un axe d'enroulement (Y), transversal à l'axe longitudinal (X) et, à proximité de l'autre des deux portions périphériques latérales, chaque face principale de la partie conductrice électrique étant recouverte d'une électrode en matériau d'insertion au Lithium (11, 12), de sorte que :
- au moins une des deux faces de la partie conductrice électrique de l'un des dispositifs est recouverte d'une anode (12) en matériau d'insertion au lithium,
- au moins une des deux faces de la partie conductrice électrique de l'autre des dispositifs est recouverte d'une cathode (11) en matériau d'insertion au lithium,
b/ empilement des deux dispositifs avec intercalage d'un premier séparateur ; l'empilement avec intercalage étant réalisé de sorte qu'une anode de l'un des deux dispositifs est en regard d'une cathode de l'autre dispositif en étant séparés du premier séparateur,
c/ scellage uniquement entre les portions périphériques latérales (23, 23P) des bandes des deux dispositifs empilés les unes contre les autres, définissant ainsi deux portions scellées de l'empilement (25),
d/ fixation de l'une des portions scellées de l'empilement, à un noyau d'enroulement (26) de sorte à ce que son axe (Y) constitue un axe d'enroulement transversal à l'axe longitudinal (X) des bandes,
e/ enroulement de l'empilement (25) dans le sens de l'axe longitudinal (X) autour de l'axe d'enroulement (Y), avec maintien de la portion scellée (23P) de l'empilement qui n'est pas fixée au noyau.

8. Procédé selon la revendication 7, selon lequel lorsque les deux électrodes, aux extrémités de l'empilement et enroulées l'une contre l'autre, sont de même polarité, on réalise au préalable de l'étape d/, une étape c1/ de recouvrement de l'empilement par un film en matériau isolant électrique.

9. Procédé selon la revendication 7, selon lequel lorsque les deux électrodes, aux extrémités de l'empilement et enroulées l'une contre l'autre, sont de polarité inverse, on réalise au préalable de l'étape d/, les étapes suivantes :
c2/ mise en place d'un deuxième séparateur sur la cathode ou anode en matériau d'insertion au Lithium en extrémité d'empilement,
c3/ maintien mécanique du deuxième séparateur à l'empilement.

10. Procédé selon l'un des revendications 7 à 9, selon lequel une fois l'étape e/ réalisée, on réalise les étapes ultérieures suivantes :
f/ emballage de l'enroulement à l'aide d'un film (28) d'emballage en matériau isolant électrique afin de maintenir mécaniquement ledit enroulement sous la forme d'un cylindre (29),
g/ scellage de la partie inférieure (30) du cylindre (30) correspondant à une des portions périphériques longitudinales des bandes,
h/ introduction du cylindre (30) à la partie inférieure scellée dans un récipient rigide (31) de forme cylindrique complémentaire, le récipient rigide constituant l'emballage de la batterie,
i/ imprégnation des séparateurs par un électrolyte liquide introduit dans le récipient,
j/ scellage de la partie supérieure du cylindre correspondant à l'autre des portions périphériques longitudinales des bandes.

11. Procédé selon l'une des revendications 7 à 10, chacun des deux collecteurs de courant terminal sous la forme d'un clinquant étant soudé à la partie conductrice électrique de l'un des collecteurs de courant des dispositifs pendant l'étape a/.

12. Procédé de réalisation selon l'une des revendications 7 à 11, d'une batterie bipolaire comprenant n cellules électrochimiques empilées individuellement les unes sur les autres, selon lequel on réalise les étapes a/ à e/ avec n-2 dispositifs pour générateur électrochimique au lithium, de forme allongée selon un axe longitudinal (X), comportant une bande comportant une portion centrale (10) au moins en partie conductrice électrique formant collecteur de courant dont au moins une des deux faces principales est recouverte d'une électrode en matériau d'insertion au lithium, et au moins deux portions périphériques latérales (221, 23, 23P) reliées à la portion centrale et s'étendant transversalement à l'axe longitudinal, les portions périphériques latérales étant en matériau isolant électrique comportant au moins un polymère, le matériau isolant d'au moins l'une des deux portions latérales étant apte à être déformé élastiquement ou plastiquement, les dimensions de cette dernière étant en outre déterminées pour permettre sa déformation sans rupture lors d'un enroulement de la bande autour d'un axe d'enroulement (Y), transversal à l'axe longitudinal (X) et, à proximité de l'autre des deux portions périphériques latérales, chaque face principale de la partie conductrice électrique étant recouverte d'une électrode en matériau d'insertion au Lithium (11, 12), n étant un nombre entier.

## Patentansprüche

1. Bipolarbatterie, umfassend mindestens zwei elektrochemische Zellen (C1, C2), die übereinander gewickelt sind, und mindestens eine Vorrichtung (1) für elektrochemischen Lithiumgenerator, von länglicher Form entlang einer Längsachse (X), beinhaltend einen Streifen, der einen zumindest teilweise elektrisch leitfähigen mittleren Abschnitt (10) beinhaltet, der einen Stromkollektor bildet, von dem mindestens eine der beiden Hauptseiten mit einer Elektrode aus Lithiumeinlagerungsmaterial bedeckt ist, und mindestens zwei seitliche Randabschnitte (221, 23, 23P), die mit dem mittleren Abschnitt verbunden sind und sich quer zur Längsachse erstrecken, wobei die seitlichen Randabschnitte aus elektrisch isolierendem Material sind, das mindestens ein Polymer beinhaltet, wobei das isolierende Material mindestens des einen der beiden seitlichen Abschnitte geeignet ist, elastisch oder plastisch verformt zu werden, wobei die Abmessungen des Letzteren ferner bestimmt sind, um seine Verformung ohne Bruch bei einem Wickeln des Streifens um eine Wickelachse (Y), quer zur Längsachse (X), zu ermöglichen, und, in der Nähe des anderen der beiden seitlichen Randabschnitte, jede Hauptseite des elektrisch leitfähigen Teils mit einer Elektrode aus Lithiumeinlagerungsmaterial (11, 12) bedeckt ist, wobei die beiden seitlichen Randabschnitte (221, 23, 23P) aus elektrisch isolierendem Material eine Randzone einer gegenüber den Elektrolyten der beiden Zellen dichten Wand bilden, die diese umgibt.

2. Batterie nach Anspruch 1, wobei das überwiegende Polymer des isolierenden und zur Verformung geeigneten Materials unter einem Polyolefin, einen Nitrilkautschuk (NBR), einem Styrol-Butadien-Kautschuk (SBR) gewählt ist.

3. Batterie nach Anspruch 2, wobei das Polyolefin unter einem Polyethylen (PE), einem Polypropylen (PP), einem Polyimid, einem Polyetheretherketon (PEEK) gewählt ist.

4. Batterie nach einem der vorhergehenden Ansprüche, wobei der elektrisch leitfähige Teil aus mindestens einer Metallfolie besteht, wobei die seitlichen Randabschnitte aus isolierendem Material an die Metallfolie gesiegelt sind.

5. Batterie nach einem der Ansprüche 1 bis 3, wobei der Streifen aus elektrisch isolierendem und zur Verformung geeigneten Material ist, wobei der elektrisch leitfähige Teil aus elektrisch leitfähigen Partikeln besteht, die in den Streifen eingebettet sind.

6. Batterie nach Anspruch 5, wobei der Streifen an seinem Rand, bis auf den zu seiner Verformung dimensionierten seitlichen Abschnitt, durch elektrisch nicht leitfähige Partikel mechanisch verstärkt ist.

7. Verfahren zur Ausführung einer Bipolarbatterie, die mindestens zwei elektrochemische Zellen (C1, C2) umfasst, die übereinander gewickelt sind, umfassend die folgenden Schritte:
a/ Ausführen von zwei Vorrichtungen (1) für elektrochemischen Lithiumgenerator, von länglicher Form entlang einer Längsachse (X), beinhaltend einen Streifen, der einen zumindest teilweise elektrisch leitfähigen mittleren Abschnitt (10) beinhaltet, der einen Stromkollektor bildet, von dem mindestens eine der beiden Hauptseiten mit einer Elektrode aus Lithiumeinlagerungsmaterial bedeckt ist, und mindestens zwei seitliche Randabschnitte (221, 23, 23P), die mit dem mittleren Abschnitt verbunden sind und sich quer zur Längsachse erstrecken, wobei die seitlichen Randabschnitte aus elektrisch isolierendem Material sind, das mindestens ein Polymer beinhaltet, wobei das isolierende Material mindestens des eines der beiden seitlichen Abschnitte geeignet ist, elastisch oder plastisch verformt zu werden, wobei die Abmessungen des Letzteren ferner bestimmt sind, um seine Verformung ohne Bruch bei einem Wickeln des Streifens um eine Wickelachse (Y) quer zur Längsachse (X) zu ermöglichen, und, in der Nähe des anderen der beiden seitlichen Randabschnitte, jede Hauptseite des elektrisch leitfähigen Teils mit einer Elektrode aus Lithiumeinlagerungsmaterial (11, 12) bedeckt ist, so dass:
- mindestens eine der beiden Seiten des elektrisch leitfähigen Teils der einen der Vorrichtungen mit einer Anode (12) aus Lithiumeinlagerungsmaterial bedeckt ist,
- mindestens eine der beiden Seiten des elektrisch leitfähigen Teils der anderen der Vorrichtungen mit einer Kathode (11) aus Lithiumeinlagerungsmaterial bedeckt ist,
b/ Stapeln der beiden Vorrichtungen mit Einlegen eines ersten Separators, wobei das Stapeln mit Einlegen so ausgeführt wird, dass eine Anode der einen der beiden Vorrichtungen gegenüber einer Kathode der anderen Vorrichtung ist, wobei sie vom ersten Separator getrennt sind,
c/ Siegeln nur zwischen den seitlichen Randabschnitten (23, 23P) der Streifen der beiden gegeneinander gestapelten Vorrichtungen, so dass zwei gesiegelte Abschnitte des Stapels (25) definiert werden,
d/ Befestigen des einen der gesiegelten Abschnitte des Stapels an einem Wickelkern (26), so dass seine Achse (Y) eine Wickelachse quer zur Längsachse (X) der Streifen darstellt,
e/ Wickeln des Stapels (25) in Richtung der Längsachse (X) um die Wickelachse (Y) herum, mit Halten des gesiegelten Abschnitts (23P) des Stapels, der nicht am Kern befestigt ist.

8. Verfahren nach Anspruch 7, bei dem, wenn die beiden Elektroden, an den Enden des Stapels und gegeneinander gewickelt, die gleiche Polarität haben, vor dem Schritt d/ ein Schritt c1/ des Bedeckens des Stapels durch einen Film aus elektrisch isolierendem Material ausgeführt wird.

9. Verfahren nach Anspruch 7, bei dem, wenn die beiden Elektroden, an den Enden des Stapels und gegeneinander gewickelt, eine umgekehrte Polarität haben, vor dem Schritt d/ die folgenden Schritte ausgeführt werden:
c2/ Platzieren eines zweiten Separators auf der Kathode oder Anode aus Lithiumeinlagerungsmaterial am Stapelende,
c3/ mechanisches Halten des zweiten Separators am Stapel.

10. Verfahren nach der Ansprüche 7 bis 9, bei dem, nachdem Schritt e/ ausgeführt wurde, die folgenden weiteren Schritte ausgeführt werden:
f/ Verpacken der Wicklung mithilfe eines Verpackungsfilms (28) aus elektrisch isolierendem Material, um die Wicklung mechanisch in Form eines Zylinders (29) zu halten,
g/ Siegeln des unteren Teils (30) des Zylinders (30), entsprechend einem der longitudinalen Randabschnitte der Streifen,
h/ Einführen des Zylinders (30) am gesiegelten unteren Teil in einen starren Behälter (31) von komplementärer zylindrischer Form, wobei der starre Behälter die Verpackung der Batterie bildet,
i/ Imprägnieren der Separatoren mit einem flüssigen Elektrolyten, der in den Behälter eingeführt wird,
j/ Siegeln des oberen Teils des Zylinders, entsprechend dem anderen der longitudinalen Randabschnitte der Streifen.

11. Verfahren nach einem der Ansprüche 7 bis 10, wobei jeder der beiden endständigen Stromkollektoren in Form einer Folie an den elektrisch leitfähigen Teil des einen der beiden Stromkollektoren der Vorrichtungen während des Schritts a/ geschweißt wird.

12. Verfahren nach einem der Ansprüche 7 bis 11 zur Ausführung einer Bipolarbatterie, umfassend n einzeln übereinander gestapelte elektrochemische Zellen, gemäß dem die Schritte a/ bis e/ mit n-2 Vorrichtungen ausgeführt werden für elektrochemischen Lithiumgenerator, von länglicher Form entlang einer Längsachse (X), beinhaltend einen Streifen, der einen zumindest teilweise elektrisch leitfähigen mittleren Abschnitt (10) beinhaltet, der einen Stromkollektor bildet, von dem mindestens eine der beiden Hauptseiten mit einer Elektrode aus Lithiumeinlagerungsmaterial bedeckt ist, und mindestens zwei seitliche Randabschnitte (221, 23, 23P), die mit dem mittleren Abschnitt verbunden sind und sich quer zur Längsachse erstrecken, wobei die seitlichen Randabschnitte aus elektrisch isolierendem Material sind, das mindestens ein Polymer beinhaltet, wobei das isolierende Material mindestens des einen der beiden seitlichen Abschnitte geeignet ist, elastisch oder plastisch verformt zu werden, wobei die Abmessungen des Letzteren ferner bestimmt sind, um seine Verformung ohne Bruch bei einem Wickeln des Streifens um eine Wickelachse (Y), quer zur Längsachse (X), zu ermöglichen, und, in der Nähe des anderen der beiden seitlichen Randabschnitte, jede Hauptseite des elektrisch leitfähigen Teils mit einer Elektrode aus Lithiumeinlagerungsmaterial (11, 12) bedeckt ist, wobei n eine ganze Zahl ist.

## Claims

1. A bipolar battery comprising at least two electrochemical cells coiled on one another and at least one device (1) for a lithium electrochemical generator, of elongate shape along a longitudinal axis (X), comprising a band comprising a central portion (10), which is at least electrically conductive in part, forming a current collector at least one of the two main faces of which is covered with an electrode made of a lithium insertion material, and at least two lateral peripheral portions (221, 23, 23P) connected to the central portion and extending transversely to the longitudinal axis, the lateral peripheral portions being made of an electrically insulating material comprising at least one polymer, the insulating material of at least one of the two lateral portions being able to be elastically or plastically deformed, the dimensions of said one of the two lateral portions furthermore being defined to allow its deformation without rupture during a coiling of the band around a coiling axis (Y) that is transverse to the longitudinal axis (X) and in proximity to the other of the two lateral peripheral portions,
each main face of the electrically conductive portion being covered with an electrode made of a lithium insertion material (11, 12),
wherein the two lateral peripheral portions (221, 23, 23P) made of electrically insulating material form a peripheral zone of a wall leak-tight to the electrolytes of the two cells, which surrounds the latter.

2. The battery as claimed in claim 1, the majority polymer of the insulating material that is able to be deformed being chosen from a polyolefin, a nitrile rubber (NBR) and a styrene butadiene rubber (SBR).

3. The battery as claimed in claim 2, the polyolefin being chosen from a polyethylene (PE), a polypropylene (PP), a polyimide and a polyetheretherketone (PEEK).

4. The battery as claimed in any of the preceding claims, the electrically conductive part consisting of at least one metal sheet, the lateral peripheral portions made of insulating material being sealed to said metal sheet.

5. The battery as claimed in any of claims 1 to 3, the band being made of an electrically insulating material that is able to be deformed, the electrically conductive part consisting of electrically conductive particles embedded in the band.

6. The battery as claimed in claim 5, the band being mechanically reinforced at its periphery, except for the lateral portion dimensioned for its deformation, by non-conductive electrical particles.

7. A process for producing a bipolar battery comprising at least two electrochemical cells coiled on one another, comprising the following steps:
a/ producing two devices (1) for a lithium electrochemical generator, of elongate shape along a longitudinal axis (X), comprising a band comprising a central portion (10), which is at least electrically conductive in part, forming a current collector at least one of the two main faces of which is covered with an electrode made of a lithium insertion material, and at least two lateral peripheral portions (221, 23, 23P) connected to the central portion and extending transversely to the longitudinal axis, the lateral peripheral portions being made of an electrically insulating material comprising at least one polymer, the insulating material of at least one of the two lateral portions being able to be elastically or plastically deformed, the dimensions of said one of the two lateral portions furthermore being defined to allow its deformation without rupture during a coiling of the band around a coiling axis (Y) that is transverse to the longitudinal axis (X) and in proximity to the other of the two lateral peripheral portions, each main face of the electrically conductive portion being covered with an electrode made of a lithium insertion material (11, 12),so that:
- at least one of the two faces of the electrically conductive part of one of the devices is covered with an anode (12) made of a lithium insertion material; and
- at least one of the two faces of the electrically conductive part of the other of the devices is covered with a cathode (11) made of a lithium insertion material;
b/ stacking the two devices with insertion of a first separator; the stacking with insertion being carried out so that an anode of one of the two devices as claimed in claim 9 is facing a cathode of the other device as claimed in claim 9, said anode and cathode being separated by the first separator;
c/ sealing only between the lateral peripheral portions (23, 23P) of the bands of the two devices stacked one against the other, thus defining two sealed portions of the stack (25);
d/ fastening one of the sealed portions of the stack to a coiling core (26) so that its axis forms a coiling axis (Y) that is transverse to the longitudinal axis (X) of the bands; and
e/ coiling the stack (25) in the direction of the longitudinal axis (X) about the coiling axis (Y), that sealed portion (23P) of the stack which is not fastened to the core being held.

8. The process as claimed in claim 7, in which when the two electrodes, at the ends of the stack and coiled one against the other, are of the same polarity, a step c1/ of covering the stack with a film made of an electrically insulating material is carried out before step d/.

9. The process as claimed in claim 7, in which when the two electrodes, at the ends of the stack and coiled one against the other, are of opposite polarity, the following steps are carried out before step d/:
c2/ a second separator is placed on the cathode or anode made of a lithium-ion insertion material at the end of the stack; and
c3/ the second separator is mechanically held on the stack.

10. The process as claimed in one of claims 7 to 9, in which once step e/ has been carried out, the following subsequent steps are carried out:
f/ packaging of the coil using a packaging film (28) made of an electrically insulating material in order to maintain mechanically said coil in the shape of a cylinder (29);
g/ sealing the lower portion (30) of the cylinder (30) corresponding to one of the longitudinal peripheral portions of the bands;
h/ inserting the cylinder (30) with the sealed lower portion into a rigid container (31) of complementary cylindrical shape, the rigid container forming the packaging of the battery;
i/ impregnating the separators with a liquid electrolyte introduced into the container; and
j/ sealing the upper portion of the cylinder corresponding to the other of the longitudinal peripheral portions of the bands.

11. The process as claimed in one of claims 7 to 10, each of the two terminal current collectors, which both take the form of a foil, being welded to the electrically conductive portion of one of the current collectors of the devices in step a/.

12. The process as claimed in one of claims 7 to 11, a bipolar battery comprising n electrochemical cells stacked individually on one another, in which steps a/ to e/ are carried out with n-2 devices, for a lithium electrochemical generator, of elongate shape along a longitudinal axis (X), comprising a band comprising a central portion (10), which is at least electrically conductive in part, forming a current collector at least one of the two main faces of which is covered with an electrode made of a lithium insertion material, and at least two lateral peripheral portions (221, 23, 23P) connected to the central portion and extending transversely to the longitudinal axis, the lateral peripheral portions being made of an electrically insulating material comprising at least one polymer, the insulating material of at least one of the two lateral portions being able to be elastically or plastically deformed, the dimensions of said one of the two lateral portions furthermore being defined to allow its deformation without rupture during a coiling of the band around a coiling axis (Y) that is transverse to the longitudinal axis (X) and in proximity to the other of the two lateral peripheral portions, each main face of the electrically conductive portion being covered with an electrode made of a lithium insertion material (11, 12), n being an integer.
